# FASCICULE DE BREVET EUROPEEN

(11) **EP 3 051 416 B1**
(45) Date de publication et mention de la délivrance du brevet: **17.04.2024**
(21) Numéro de dépôt: 16305108.9
(22) Date de dépôt: 02.02.2016
(51) Int. Cl.: G06F 9/50

(54) **PROCÉDÉ DE COMMANDE DE DÉPLOIEMENT D'UN PROGRAMME A EXÉCUTER DANS UN PARC DE MACHINES**
STEUERVERFAHREN ZUM BETREIBEN EINES PROGRAMMS, DAS IN EINEM MASCHINENPARK AUSGEFÜHRT WERDEN SOLL
METHOD FOR CONTROLLING THE DEPLOYMENT OF A PROGRAM TO BE EXECUTED IN A FLEET OF MACHINES

(30) Priorité: 02.02.2015 FR 1550803
(43) Date de publication de la demande: 03.08.2016
(73) Titulaire: Idemia Identity & Security France, 92400 Courbevoie (FR)
(72) Inventeur: ROUSSEAU, Woody, Alan, Ulysse, 92130 Issy les Moulineaux (FR); LE CORRE, Laurent, Jean, José, 92130 Issy les Moulineaux (FR); BERTINI, Marc, 92130 Issy Les Moulineaux (FR)
(74) Mandataire: Idemia

(56) Documents cités:
- US-A1- 2005 114 861
- US-A1- 2006 048 157
- US-A1- 2014 068 621
- US-B1- 6 345 240
- US-B1- 6 385 638

## Description

### DOMAINE GENERAL

L'invention concerne un procédé de commande de déploiement d'un programme dans un parc de machines.

### ETAT DE L'ART

On connaît de l'état de la technique des systèmes informatiques distribués comprenant une pluralité d'ordinateurs distincts.

Ces systèmes sont capables de mettre en oeuvre un même programme de façon distribuée, c'est-à-dire en déléguant aux différents ordinateurs, ou « machines », l'exécution en parallèle de différents processus de ce programme.

Chaque machine comprend des ressources matérielles susceptibles de participer à l'exécution de ce programme.

Un problème particulier qui se pose dans de tels systèmes distribués est celui de la gestion dynamique des ressources matérielles alors que le programme est déjà en cours d'exécution.

Supposons qu'à un instant de référence t le programme exige l'exécution d'un certain nombre de processus en parallèle, qui requiert une quantité théorique de ressources matérielles. Si à cet instant t le programme est exécuté au moyen d'une quantité de ressources matérielles inférieure à la quantité théorique, alors le programme est exécuté dans des conditions dégradées.

Il est connu un système distribué qui détecte que la quantité qu'une ressource matérielle d'un des ordinateurs sollicités atteint 100% d'utilisation. En réponse à cette détection, ce système sollicite une machine supplémentaire non encore utilisé pour exécuter les tâches qui ne pouvait être exécutées.

Toutefois, l'allocation d'une machine supplémentaire est une solution grossière, car consommatrice en termes de nombre d'ordinateurs alors que cela peut ne pas être réellement nécessaire. En effet, il se peut que la quantité cumulée des ressources matérielles des ordinateurs déjà sollicités soit inférieure à la quantité totale théorique requise par le programme, et ce même si les ressources matérielles propres à l'un de ces ordinateurs est à 100% d'utilisation.

On connaît à cet égard du document US 2006/0048157 un procédé d'ordonnancement de processus. Ce procédé d'ordonnancement affecte des « jobs » à différentes machines d'un parc de machines.

### PRESENTATION DE L'INVENTION

Un but de l'invention est d'affecter dynamiquement les processus d'un programme à faire exécuter à des machines, d'une manière qui sollicite un moins grand nombre de machines que les procédés connus de l'état de la technique.

Il est dès lors proposé un procédé de déploiement dans un parc de machines d'un programme à exécuter, le procédé comprenant des étapes de :
- mesure d'une quantité de ressources matérielles disponible auprès de chaque machine,
- mesure d'une qualité de service du programme au cours de son exécution par le parc de machines,
- détermination de plusieurs processus du programme à exécuter en parallèle, à partir de la qualité de service mesurée et à partir d'une qualité de service de consigne prédéterminée,
- pour chaque processus, estimation d'une quantité de ressources matérielles requise pour l'exécution du processus,
- affectation des processus à des machines du parc en fonction des quantités de ressources matérielles mesurées pour chacune des différentes machines et des quantités de ressources requises estimées,
- commande d'installation d'un processus affecté à une machine dans ladite machine, si le processus n'est pas déjà installé dans ladite machine,
- en cas d'échec de l'étape d'affectation, ajustement de la qualité de service de consigne à une valeur dégradée par rapport à sa précédente valeur,
- mise en oeuvre des étapes de détermination de processus à exécuter et d'affection, sur la base de la qualité de service de consigne ajustée.

L'invention peut également être complétée par les caractéristiques suivantes, prises seules ou en une quelconque de leurs combinaisons techniquement possibles.

Si un processus donné du programme est déjà en cours d'exécution par une machine du parc et que ce processus donné n'est pas déterminé comme étant à exécuter au cours de l'étape de détermination, le procédé peut comprendre la désinstallation du processus donné de la machine qui l'exécute.

Si un processus donné du programme est déjà en cours d'exécution par une machine du parc et que ce processus donné n'est pas affecté à la machine qui l'exécute au cours de l'étape d'affectation, le procédé peut comprendre la désinstallation du processus donné de la machine qui l'exécute.

La mesure de qualité de service du programme peut comprendre :
- une mesure d'un temps de réponse du programme à une requête émanant d'au moins un équipement réseau, lorsqu'il est exécuté par le parc de machine, et/ou
- une mesure d'un nombre de requêtes émanant d'au moins un équipement réseau qui sont traitées par unité de temps, par le programme lorsqu'il est exécuté par le parc de machines, et/ou
- une mesure d'une durée de disponibilité durant laquelle le programme est apte à traiter des requêtes externes dans une période de temps prédéterminée, lorsqu'il est exécuté par le parc de machines.

Le procédé peut comprendre en outre une étape de prédiction de quantités de ressources matérielles consommées par le parc de machines à un instant de référence, à partir des quantités de ressources matérielles mesurées au cours d'un intervalle de temps précédant l'instant de référence, la détermination des processus à exécuter à l'instant de référence dépendant des quantités de ressources matérielles consommées prédites.

La prédiction peut comprendre comprend la recherche et la détection d'un motif périodique dans les quantités de ressources matérielles mesurées au cours de l'intervalle de temps, les quantités de ressources matérielles requises dépendant du motif périodique détecté.

L'affectation peut comprendre des comparaisons entre des quantités de ressources mesurées et des quantités de ressource requises, l'affectation dépendant des résultats de ces comparaisons.

L'affectation des processus déterminés peut en outre être mise en oeuvre séquentiellement machine après machine.

Des processus déterminés peuvent être affectés à une machine, dite machine courante, tant que le cumul des quantités de ressources matérielles requises pour l'exécution de processus déjà affectés à la machine courante demeure inférieur à la quantité de ressources matérielle disponible auprès de la machine courante.

Un deuxième aspect de l'invention est un produit programme d'ordinateur comprenant des instructions de code de programme pour l'exécution des étapes du procédé de commande de déploiement précité, lorsque ce programme est exécuté par un serveur.

Ce programme peut également comprendre les instructions de code des processus à faire exécuter par le parc de machines.

Selon un troisième aspect, l'invention propose un serveur comprenant :
- une interface de communication pour communiquer avec un parc de machines,
- une mémoire mémorisant un programme cible à faire exécuter par des machines dudit parc,
- une unité de déploiement configurée pour :
   - mesurer une quantité de ressources matérielles disponible auprès de chaque machine,
   - mesurer une mesure de qualité de service du programme cible au cours de son exécution par le parc de machine,
   - déterminer plusieurs processus du programme cible à exécuter en parallèle, à partir de la qualité de service mesurée et à partir d'une qualité de service de consigne prédéterminée,
   - estimer, pour chaque processus, une quantité de ressources matérielles requise pour l'exécution du processus,
   - affecter les processus à des machines du parc, en fonction des quantités de ressources matérielles mesurées pour chacune des différentes machines et des quantités de ressources requises estimées,
   - commander l'installation d'un programme affecté à une machine dans ladite machine, si le processus n'est pas déjà installé dans ladite machine,
   - en cas d'échec de l'étape d'affectation, ajuster la qualité de service de consigne à une valeur dégradée par rapport à sa précédente valeur,
   - mettre en oeuvre les étapes de détermination de processus à exécuter et d'affection, sur la base de la qualité de service de consigne ajustée.

Ce serveur peut être utilisé comme une des machines du parc de machine qui exécute le programme cible.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 représente schématiquement un réseau de déploiement un programme comprenant un parc de machines pour exécuter un programme cible.
La figure 2 représente des modules fonctionnels d'un programme de déploiement selon un mode de réalisation de l'invention.
La figure 3 est un organigramme d'étapes d'un procédé mis en oeuvre au moyen des modules fonctionnels illustrés en figure 2.
La figure 4 détaille une étape d'affectation de l'organigramme de la figure 3, selon un mode de réalisation de l'invention.
La figure 5 montre de façon schématique un exemple de ressources matérielles requises par des processus à exécuter, des ressources matérielles disponibles auprès de machines, et des affectations de ces processus à des machines.

Sur l'ensemble des figures, les éléments similaires portent des références identiques.

### DESCRIPTION DETAILLEE DE L'INVENTION

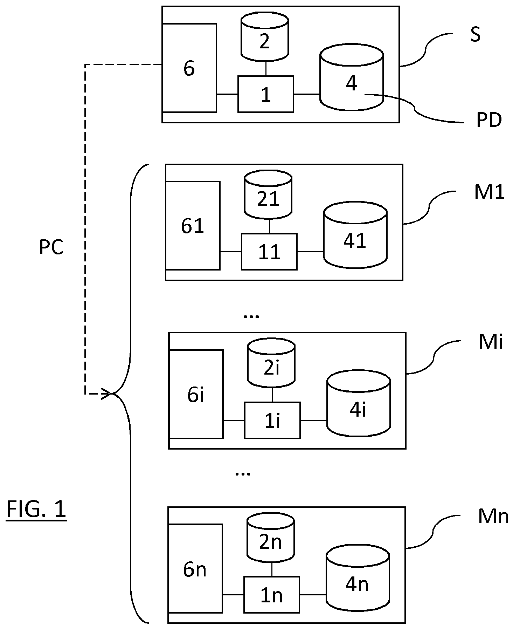

En référence à la figure 1, un serveur S de déploiement comprend une unité de traitement de données 1, une mémoire tampon 2, une mémoire de stockage 4, et une interface de communication réseau 6.

L'unité de traitement de données 1 comprend typiquement un ou plusieurs processeurs adaptés pour fonctionner en parallèle. Chaque processeur est adapté pour exécuter des instructions de code de programme.

La mémoire de stockage 4 est adaptée pour mémoriser un ou plusieurs programmes ainsi que des données et les conserver même après une mise hors tension du serveur S.

La mémoire de stockage 4 peut par exemple comprendre un ou plusieurs disques de type disque dur, un ou plusieurs disques de type SSD (« Solid State Drive »), ou une combinaison de ces type de disque. L'unité mémoire de stockage 4 peut comprendre un ou des disque(s) intégré(s) à demeure dans le serveur S et/ou comprendre une ou plusieurs clés de stockage amovible présentant un connecteur de type USB ou autre.

La mémoire tampon 2 est configurée pour mémoriser des données temporaires au cours de l'exécution d'un programme par l'unité de traitement 1. Les données temporaires mémorisées par la mémoire tampon 2 sont automatiquement effacées lors de la mise hors tension du serveur S. La mémoire tampon 2 comprend par exemple une ou plusieurs barrettes de mémoire RAM.

L'interface de communication 6 est adaptée pour émettre et recevoir des données sur le réseau. Cette interface 6 peut être du type filaire ou bien sans fil (par exemple être apte à communiquer par Wi-Fi).

On définit dans la suite un réseau de déploiement comprenant, en plus du serveur de déploiement S, un parc d'ordinateurs physiques M1 à Mn, qualifiés dans la suite de « machines ».

Le réseau de déploiement peut être un réseau privé, ou bien un réseau public tel qu'Internet.

Le réseau de déploiement est tel que le serveur S est apte à communiquer avec chaque machine Mi du parc.

Chaque machine Mi du parc comprend typiquement les mêmes composants que le serveur de déploiement S. Plus précisément, une machine Mi d'indice i comprend une unité de traitement de données 1i, au moins une mémoire de stockage 4i, au moins une mémoire tampon 2i, et une interface de communication réseau 6i. Chacun de ces composants peut être similaire au composant correspondant du serveur S (c'est-à-dire le composant ayant le même numéro de référence mais sans suffixe i).

### Ressources matérielles

Les ressources matérielles d'une machine Mi (ou du serveur S) se rapportent aux composants de la machine Mi définis plus haut, qui participent à l'exécution d'un programme donné.

Ces ressources matérielles peuvent être de types différents, chaque type de ressource étant quantifiable.

Un premier type de ressource matérielle est un temps processeur, ou temps d'utilisation, ou niveau d'utilisation, représentatif d'un degré de sollicitation d'un processeur de l'unité de traitement 1i, pour l'exécution de processus. Un tel temps processeur est généralement présenté à un utilisateur par le programme de suivi sous la forme d'au moins une valeur en pourcents, chaque valeur se rapportant à taux d'utilisation d'un processeur respectif de l'unité de traitement de données 1i (0 % indiquant un processeur non sollicité, et 100 % indiquant un processeur ne pouvant pas être davantage sollicité, notamment pour l'exécution d'un processus supplémentaire). Un deuxième type de ressource matérielle est une taille de la mémoire, se rapportant à la mémoire tampon 2i ou bien à la mémoire de stockage 4i. Une telle taille est par exemple exprimée en mégaoctets.

Un troisième type de ressources matérielles est une bande passante réseau, qui se rapporte à l'interface de communication réseau 6i.

On considère à présent deux programmes d'ordinateurs : un programme cible PC, et un programme de déploiement PD du programme cible PC. Comme on le verra dans la suite, ces deux programmes d'ordinateurs peuvent former deux parties d'un seul et même programme d'ordinateur.

### Programme cible PC

Le programme cible PC est un programme destiné à être exécuté de façon distribuée par le parc de machines M1-Mn. Ce programme cible PC comprend des blocs d'instructions de code constituant des processus susceptibles d'être exécutés simultanément par les machines M1-Mn.

Chaque processus assure une fonction quelconque.

Par convention, on considérera dans la suite qu'un processus du programme cible PC est exécutable par un seul ou plusieurs processeurs. Un processus peut en effet comprendre une ou plusieurs tâches, ou fils d'instructions au sens de la norme (terme et définition normalisés par ISO/CEI 2382-7:2000 (communément appelés « threads » en anglais).

Une tâche est similaire à un processus car tous deux représentent l'exécution d'un ensemble d'instructions du langage machine d'un processeur. Du point de vue de l'utilisateur, ces exécutions semblent se dérouler en parallèle. Toutefois, là où chaque processus possède sa propre mémoire virtuelle, les threads d'un même processus se partagent sa mémoire virtuelle. Par contre, tous les threads possèdent leur propre pile d'appel.

On retiendra qu'au cours de leur exécution, certains processus peuvent commander l'émission des données à destination d'un serveur tiers connecté à la ou les machines qui l'exécutent et/ou la réception des données émanant d'un tel serveur tiers. Par convention, on désignera dans la suite ces processus particulier de « processus réseau ».

### Programme de déploiement PD

Le programme de déploiement PD a pour fonction principale de commander le déploiement et l'exécution du programme cible PC par toutes ou certaines des machines M1 à Mn du parc.

Le programme de déploiement est installé dans la mémoire 4 du serveur S et mis en oeuvre par l'unité de traitement 1.

Le programme cible PC et le programme de déploiement PD peuvent être des programme distincts installables indépendamment l'un de l'autre, ou bien se présenter sous la forme d'un seul et même code monolithique installable. Dans ce dernier cas, le programme PC-PD monolithique est installé dans la mémoire 4i de chaque machines M1-Mn ; la partie « PD » de déploiement de ce programme monolithique ne sera cependant exécutée que par l'unité de traitement 1 du serveur S.

L'unité de traitement de données 1 est adaptée pour mettre en oeuvre le programme de déploiement PD, lequel est préalablement mémorisé dans la mémoire 4.

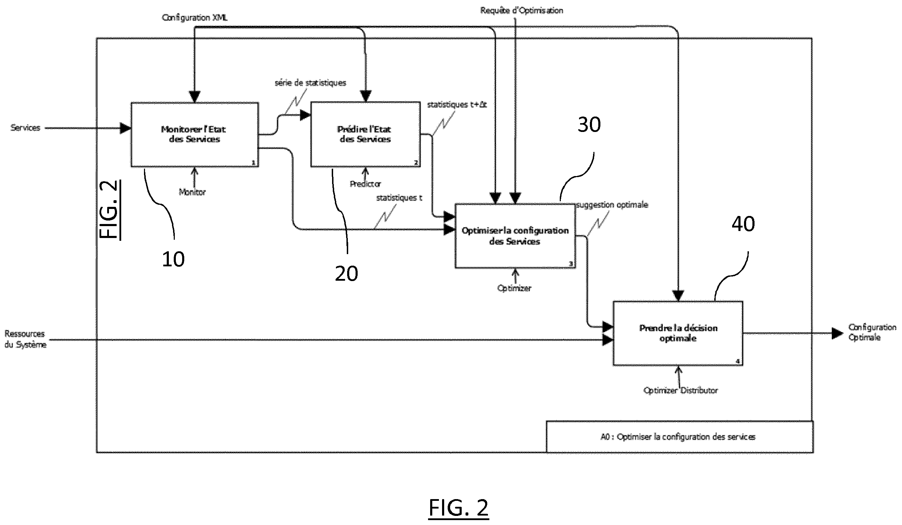

En référence à la **figure 2****,** le programme de déploiement PD comprend différents modules fonctionnels: un module de surveillance 10, un module de prédiction 20, un module d'optimisation 30, et un module d'affectation 40.

Le module de surveillance 10 est configuré pour surveiller l'état de ressources matérielles des machines M1-Mn, et fournir des données statistiques aux modules de prédiction 20 et/ou d'optimisation 30.

Le module de prédiction 20 est adapté pour communiquer avec le module de surveillance ; il utilise les données statistiques fournies par le module de surveillance pour mettre en oeuvre des calculs prédictifs.

Le module d'optimisation 30 est quant à lui adapté pour communiquer d'une part avec le module de prédiction et d'autre part avec le module de surveillance. Le module d'optimisation est notamment configuré pour déterminer les processus du programme cible PC à exécuter, en fonction de données émanant du module de surveillance et/ou du module de prédiction et d'un mécanisme d'optimisation.

Le ou les processus à exécuter déterminés par le module d'optimisation constituent une suggestion « optimale » d'exécution, fournie au module d'affectation 40 compte tenu des capacités disponibles du parc de machines.

Le module d'affectation 40 est adapté pour communiquer avec le module d'optimisation. Il est configuré pour affecter les processus sélectionnés par le module d'optimisation à des machines du parc, en vue de leur exécution.

Le module d'affectation 40 produit des données représentatives d'une affectation de chaque processus sélectionné par le module d'optimisation, à une machine du parc.

Les quatre modules 10, 20, 30, 40 sont paramétrables au moyen d'un fichier de configuration XML.

### Qualité de service du parc de machines

Dans la suite on définit une qualité de service (abrégée en « QoS » dans la littérature) du programme cible PC exécuté sur un parc de machine comme une ou plusieurs métriques quantifiables qui évaluent les conditions de communication de données sur un réseau déterminé, lorsque le parc de machines exécute le programme cible PC.

Ce réseau déterminé peut être le réseau de déploiement lui-même, ou bien un autre réseau.

La qualité de service de l'ensemble programme cible PC, parc de machines est représentée par au moins une des données suivantes :
- un nombre de requêtes par unité de temps, traitées par le programme cible exécuté par le parc de machines (par exemple émanant d'au moins un équipement réseau tiers).
- un temps de réponse du programme cible lorsqu'il est exécuté par le parc à un message normalisé, une requête (par exemple émis par au moins un équipement externe au parc), par exemple exprimé en millisecondes.
- une durée de disponibilité pendant laquelle le programme cible est apte à traiter le nombre de requêtes externes par unité de temps avec un temps de réponse prédéfinis, sur une période de temps prédéterminée.

On comprend que la qualité de service peut dépendre de l'état de sollicitation des différentes machines du parc pour exécuter des programmes et notamment le programme cible PC.

### Procédé de déploiement du programme cible

Il va maintenant être décrit un procédé pour déployer le programme cible PC dans le parc de machines M1-Mn, c'est-à-dire pour le faire exécuter par toutes ou certaines de ces machines au moyen de leurs ressources matérielles respectives.

Ce procédé de déploiement est commandé par le programme de déploiement PD.

On suppose dans un état initial que le programme cible PC est mémorisé seulement dans la mémoire de stockage 4 du serveur S.

Le procédé comprend quatre étapes principales :
- une étape 100 de suivi de ressources disponibles, mise en oeuvre par le module de suivi 10;
- une étape optionnelle 200 de prédiction, mise en oeuvre par le module de prédiction 20;
- une étape 300 d'optimisation, mise en oeuvre par le module d'optimisation 30; et
- une étape 400 d'affectation, mise en oeuvre par le module d'affectation 40.

### 1. Suivi de ressources disponibles dans le parc de machines

L'étape de suivi 100 comprend les sous-étapes suivantes.

Dans une étape 102, le module de suivi mesure une quantité de ressources matérielles auprès de chacune des machines M1-Mn.

La quantité de ressources matérielles mesurée auprès de chaque machine Mi est une quantité de ressources disponibles, c'est-à-dire non utilisées par la machine à l'instant de mesure.

Chaque mesure 102 peut par exemple comprendre la génération d'une requête de surveillance par le module de suivi lequel est exécuté par l'unité de traitement 1 du serveur S, l'envoi de la requête à une machine Mi via l'interface 6, et la réception d'une réponse à la requête contenant la quantité disponible demandée.

Les mesures 102 sont par exemples déclenchées par le module de suivi périodiquement, avec une période Ti pour un machine Mi donnée. Les périodes Ti peuvent être identiques ou différentes.

Le module de suivi horodate 104 les mesures acquises, c'est-à-dire qu'il attribue à chaque quantité de ressource mesurée une date de mesure. Cette date peut par exemple être l'instant de réception de la mesure par l'unité de traitement 1, via l'interface de communication 6 du serveur S.

Le module de suivi commande la mémorisation 106 des mesures horodatées dans la mémoire de stockage 4 du serveur S. Ces mesures horodatées peuvent être mémorisées sous la forme de séries temporelles.

Les étapes 102, 104, 106 ci-dessus sont mises en oeuvre par le module de suivi de façon répétées pour chaque machine Mi, et pour plusieurs des types de ressources matérielles évoqués précédemment. On prendra dans la suite comme exemple un mode de réalisation dans lequel le premier type de ressource(temps processeur) et le deuxième type de ressource (taille mémoire disponible) sont suivis au cours de l'étape de suivi 100.

### 2. Prédiction

Le module de prédiction met en oeuvre 200 des calculs de modèles stochastiques à partir des séries temporelles mémorisées. Ces modèles peuvent typiquement être basés sur du lissage exponentiel à double saisonnalités.

Ces modèles stochastiques peuvent être exploités dans les cas où les ressources matérielles des machines M1-Mn suivent une tendance reconnaissable au fil des jours de la semaine et des heures de chaque jour (double saisonnalités).

Pour ce faire, le module de prédiction recherche 202, dans les mesures mémorisées et horodatées, un motif périodique de sollicitation des ressources, par exemple dans un intervalle de temps de longueur prédéterminée.

Sur la base d'un tel motif, le module de prédiction estime 204 des ressources matérielles consommées par des machines M1-Mn, à un instant futur,.

Par exemple, dans une application particulière du procédé, le réseau de déploiement est un réseau privé d'un aéroport et le programme cible PC à déployer dans le réseau est un programme de surveillance au frontières sous le contrôle de l'aéroport.

Chaque arrivée d'un avion suscite une forte activité au sein de l'aéroport, et donc une forte sollicitation des ressources matérielles du parc de machines M1-Mn. Aussi, lorsque des mesures sont mémorisées sur une durée suffisamment longue (au moins une semaine) et à fréquence suffisamment élevée (plusieurs mesures par jour), le module de prédiction dispose de données suffisantes pour prédire de façon précise une sollicitation future du parc de machines M1-Mn.

Afin d'éviter la corruption des modèles de prédiction par des journées « anormales » (jours fériés, grèves, etc.), des techniques d'apprentissage peuvent être utilisées par le module de prédiction. Une analyse en composantes principales est effectuée sur un jeu de journées récentes afin de les projeter le long de ces composantes. Un critère de distance à un proche voisin est alors utilisé pour détecter des journées anormales. Ces journées sont alors une par une reconstruites en utilisant le modèle stochastique utilisé par le module de prédiction.

### 3. Optimisation d'après objectif

A titre préliminaire, est mémorisée dans le module d'optimisation une qualité de service de consigne, que le programme cible PC doit respecter lorsqu'il est exécuté par le parc de machines. Cette consigne comprend par exemple une valeur de débit de données minimal, et une valeur de temps de réponse maximal.

Par ailleurs, le module d'optimisation mesure 302 une qualité de service du programme au cours de son exécution par le parc de machine.

Le module d'optimisation détermine 306, à un instant t de référence, un jeu de processus à exécuter simultanément, à partir des données suivantes :
- la qualité de service de consigne,
- la qualité de service mesurée au cours de l'étape 302,
- les estimations de sollicitation des ressources matérielles calculées par le module de prédiction pour cet instant t, ou bien les mesures brutes produites par le module de suivi dans un mode de réalisation sans module de prédiction.

Le nombre de processus déterminé par le module d'optimisation varie en fonction de ces données.

Pour chaque processus du jeu déterminé, le module d'optimisation détermine 308 une quantité de ressources matérielles requises pour exécuter le processus de façon nominale.

### 4. Affectation des processus à des machines du parc

Le module d'affectation reçoit du module de suivi (ou du module de prédiction, si présent) une quantité de ressources déclarée comme disponible, machine par machine, à l'instant de référence t ou un instant proche.

Par ailleurs, le module d'affectation reçoit du module d'optimisation :
- le jeu des processus déterminé via l'étape 306,
- pour chaque processus du jeu, une quantité de ressources déclarée requise, machine par machine, à l'instant de référence t ou un instant proche, via l'étape 308.

Chaque processus est associé à une paire de valeurs (temps processeur requis + taille mémoire requise), la paire de valeurs représentant la quantité de ressources requise pour son exécution. Deux types de ressources sont donc à examiner.

L'affectation 400 est mise en oeuvre par le module d'affectation, en itérations successives, machine après machine (par exemple en commençant par la machine M1).

Pour une machine donnée Mi, l'affectation est mise en oeuvre processus par processus (en commençant par exemple par P1).

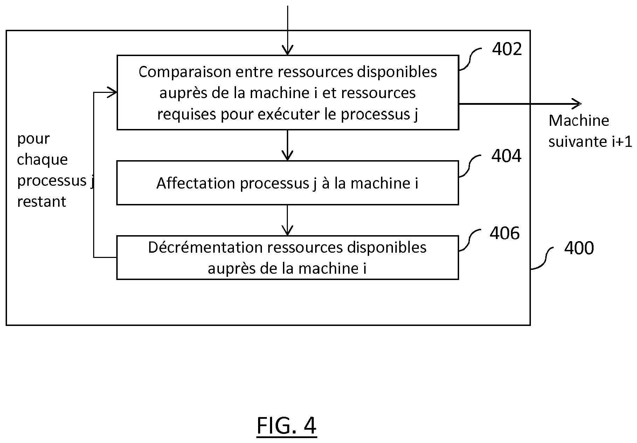

En référence à la **figure 4****,** les étapes suivantes sont mises en oeuvre pour déterminer si un processus Pj est affecté à la machine Mi.

Le module d'affectation compare 404 les ressources requise pour l'exécution du processus Pj, avec les ressources déclarées disponibles auprès de la machine Mi.

L'étape de comparaison 404 comprend plus précisément deux types de comparaison :
- Une comparaison entre la valeur de temps processeur requise pour l'exécution du processus Pj, et la valeur de temps processeur déclarée disponibles auprès de la machine Mi, et
- Une comparaison entre la valeur de taille de mémoire tampon requise pour l'exécution du processus Pj, et la valeur de taille de mémoire tampon déclarée disponibles auprès de la machine Mi.

Si chacune des valeurs requises est inférieure à la valeur disponible correspondante auprès de la machine Mi, cela signifie qu'un processus de la machine Mi dispose de suffisamment de ressources pour exécuter le processus Pj dans des conditions nominales.

Dans ce cas, le processus Pj est alors affecté 404 à la machine Mi. Cette affectation peut dans la pratique comprendre la mémorisation d'un lien logique dans la mémoire temporaire 2 qui représente cette affectation.

Toujours dans ce cas, le module d'affectation décrémente 406 la quantité de ressources disponibles auprès de la machine Mi de la quantité de ressources requises pour le processus Pj, qui vient d'être affecté.

En revanche, si au moins une des deux valeurs requises est strictement supérieure à la valeur disponible correspondante qui lui est comparée, le processus Pj n'est pas affecté à la machine Mi ; les étapes 402, 404 et 406 sont répétées pour un autre processus Pj à exécuter, et sur la base de la quantité de ressources disponibles décrémentée.

Une fois qu'il ne reste plus assez de ressources disponibles auprès de la machine Mi pour permettre une quelconque affectation de processus non encore affectés, la machine suivante Mi+1 est examinée selon les mêmes étapes.

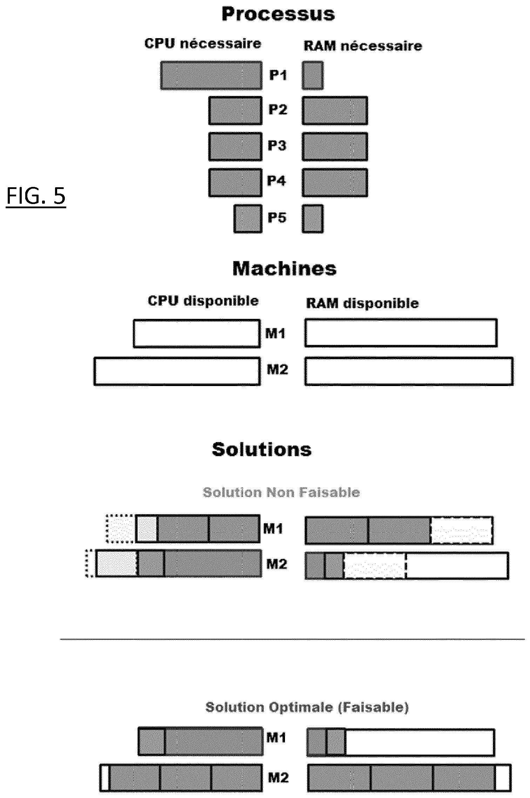

Dans l'exemple illustré en figure 5, cinq processus P1 à P5 ont été déterminés, et sont à affecter dans un parc comprenant deux machines M1 et M2.

Pour chaque processus P1 à P5, une quantité correspondante de ressources matérielles requises pour son exécution dans des conditions nominales. Le temps processeur requis pour l'exécution du processus Pj est illustré en haut à gauche de la figure 5 (« CPU nécessaire »), et la taille de mémoire requise pour la mémorisation de données temporaires au cours de l'exécution de ce même processus Pj est illustrée schématiquement en haut à droite de la figure 5 (« RAM nécessaire »).

Chacune des machines M1 et M2 dispose d'un temps processeur disponible (« CPU disponible », au centre à gauche de la figure 5) et d'une taille de mémoire tampon disponible (« RAM disponible » au centre à droite de la figure 5).

La figure 5 montre en outre deux résultats d'affectation : l'un non faisable, et écarté lors de la mise en oeuvre des étapes illustrées en figure 4, et l'autre faisable (en bas de la figure 5).

On notera qu'un même processus, dit processus de référence, peut avoir à être exécuté plusieurs fois en parallèle par une ou plusieurs machines du parc (c'est-à-dire que l'ensemble des processus à exécuter déterminés peut comprendre au moins un processus en plusieurs exemplaires).

Le module d'affectation peut dans ce cas recevoir du module d'optimisation deux nombres d'exécutions du processus de référence : un nombre d'exécutions actuelles (au moyen des ressources matérielles actuelles), et un nombre d'exécutions à prendre en charge (au moyen des ressources matérielles requises déterminées dans l'étape 308).

Une différence non nulle entre ces deux nombre d'exécutions indique un nombre d'exécution à affecter ou bien un nombre d'exécutions du processus de référence à stopper dans le parc de machines (selon le signe de cette différence).

Par ailleurs, dans le mode de réalisation d'affectation présenté précédemment, tous les processus déterminés et devant être affectés sont traités sur un pied d'égalité. En variante, chaque processus peut se faire attribuer un poids représentatif d'une priorité d'exécution (par exemple, un poids de processus élevé peut indiquer que son affectation doit être traitée en premier, ou tout du moins de façon prioritaire). Dans ce cas, l'affectation des processus pondérés peut être mise en oeuvre selon un algorithme connu répondant au problème du type « sac à dos » (en anglais, « Knapsack problem ») connu de l'homme du métier.

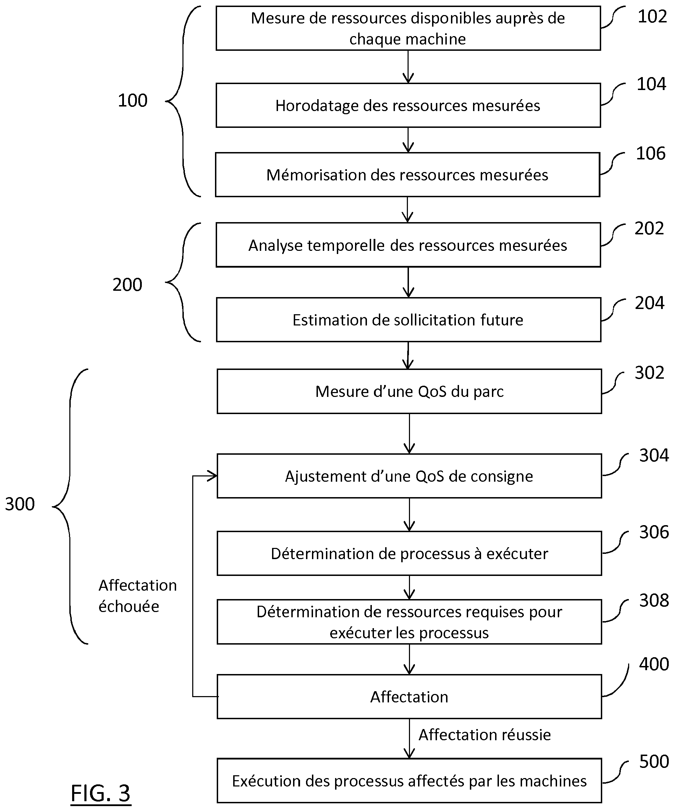

De retour à la **figure 3****,** l'affectation 400 se termine une fois que toutes les machines ont été examinées ou que tous les processus ont été affectés.

L'affectation 400 se termine avec succès si tous les processus ont pu être affectés.

L'affectation 400 se solde par un échec dans le cas où, après avoir parcouru toutes les machines, il reste encore au moins un processus non encore affecté. Ce cas survient par exemple lorsque :
- le temps processeur requis pour l'exécution de l'ensemble des processus déterminés est supérieur à la somme des temps processeur disponibles auprès de toutes les machines du parc ; ou
- la taille mémoire requise pour l'exécution de l'ensemble des processus déterminés est supérieure à la somme des tailles mémoires disponibles auprès de toutes les machines du parc ;
- un processus requiert un temps processeur supérieur à chacun des temps processeurs disponibles des processeurs du parc ;

En cas d'un échec de l'étape d'affectation, les étapes suivantes sont mises en oeuvre.

Le module d'affectation envoie un message signalant un échec d'affectation au module d'optimisation.

Sur réception de ce message d'échec, le module d'optimisation ajuste 304 la qualité de service de consigne initiale à une valeur « dégradée », c'est-à-dire à une valeur représentative d'une moins bonne qualité de service que celle utilisée pour déterminer le jeu des processus que le module d'affectation n'est pas parvenu à affecter dans son ensemble.

Par exemple, au cours de cette étape d'ajustement 304, le module d'optimisation diminue la valeur du débit de données de consigne minimal que le parc de machine doit respecter, et/ou augmente le temps de réponse maximal de consigne que le parc doit respecter.

Ensuite, l'étape de détermination 306 est répétée de façon à produire un nouveau jeu de processus à faire exécuter par le parc de machines, et ce à partir de la qualité de service de consigne mise à jour à la valeur « dégradée ». On comprend que la qualité de service « dégradée » est moins difficile à faire respecter par le parc de machine ; le nouveau jeu de processus déterminé est moins difficile à affecter à des machines du parc.

Pour cette nouvelle mise en oeuvre de l'étape de détermination 306, la qualité de service déjà mesurée au cours de l'étape 302 peut être directement utilisée ; en variante, l'étape 302 est à nouveau mise en oeuvre de façon à obtenir une mesure plus récente de la qualité de service du programme cible, l'étape de détermination étant mise en oeuvre à partir de cette mesure plus récente.

Le fait d'utiliser comme qualité de service le temps de réponse du programme à une requête émanant d'au moins un équipement réseau, lorsqu'il est exécuté par le parc de machine, a pour avantage de permettre d'intervenir sur ce temps de réponse. On peut par exemple attribuer davantage de processus pour traiter la requête ; le temps de traitement de la requête par le parc de machine va alors se trouver diminué. Ainsi, s'il est déterminé que le temps de réponse mesuré sur une dernière période de surveillance est supérieur au temps de réponse de consigne, alors le nombre de processus à exécuter dans le but de traiter cette requête peut être augmenté. Le temps de réponse de cette requête sera alors automatiquement diminué jusqu'à atteindre un temps de réponse inférieur à la valeur de consigne utilisée.

Par ailleurs, le fait d'utiliser comme qualité de service le nombre de requêtes émanant d'au moins un équipement réseau qui sont traitées par unité de temps, par le programme lorsqu'il est exécuté par le parc de machines, a pour avantage de permettre d'adapter globalement la taille du parc de machines à un ensemble de sollicitations extérieures. En effet quand la demande globale augmente, le nombre de requête par unité de temps augmente à l'entrée du système ; il peut alors être prévu de déployer le programme sur plus de machines qu'auparavant afin de traiter l'ensemble des requêtes entrantes. De la même façon, quand la quantité de requêtes par unité de temps diminue à l'entrée du système, le déploiement du programme peut devenir disproportionné. Il peut alors être décidé, comme on le verra dans la suite, de désinstaller certains processus en cours d'exécutions sur certaines machines.

Par ailleurs, le fait d'utiliser comme qualité de service la disponibilité durant laquelle le programme est apte à traiter des requêtes externes dans une période de temps prédéterminée, lorsqu'il est exécuté par le parc de machines, a pour avantage de permettre de préserver une redondance minimale dans le déploiement des processus, redondance qui permet de garantir la disponibilité du système. En effet si suite à une très faible sollicitation l'invention décide de se replier sur une unique machine suffisante pour traiter la quantité de requêtes actuellement envoyées, et si par malheur cette machine connaît un problème hardware alors le système devient indisponible jusqu'à ce qu'il soit redéployé sur une autre machine. Si par contre, du fait de la consigne de disponibilité, l'invention sait qu'elle ne doit pas avoir moins de 3 instances de chaque processus et que ces instances doivent être déployées sur des machines différentes alors on garantit une certaine disponibilité.

Pour chaque nouveau processus, une nouvelle paire de valeurs (temps CPU requis + taille mémoire requis) peut être calculée.

Dans un mode de réalisation, les valeurs (temps CPU requis + taille mémoire requis) ne sont pas modifiées par rapport à précédemment, le nombre de processus à exécuter étant simplement diminué.

L'étape d'affectation 400 est ensuite répétée par le module d'affectation, cette fois en prenant en entrée le nouveau jeu de processus déterminé.

En cas de nouvel échec, les étapes d'ajustement 304 de la qualité de service de consigne, de détermination 306 de nouveau processus, et d'affectation 400 des processus déterminés sont répétées, jusqu'à ce que l'affectation réussisse.

L'affectation décrite ci-dessus peut être généralisée à n machines et p processus.

Une fois l'affectation 400 effectuée avec succès, le module d'affectation envoie 500 à chaque machine désignée une commande d'exécution de chaque processus qui lui été affecté.

Cette commande d'exécution peut comprendre le code des processus en tant que tel lors que ce code n'est pas déjà mémorisé par la mémoire 2i ou 41 de la machine Mi désigné.

En variante, la commande d'exécution comprend simplement une instruction ordonnant l'exécution par l'unité de traitement 2i du processus préalablement mémorisé dans la mémoire 2i ou la mémoire 4i.

Lorsque le processus est mémorisé dans la mémoire de stockage 4i, on dit conventionnellement que le processus est « installé » dans la machine i.

Le procédé peut être mis en oeuvre de façon répétée au cours de l'exécution globale du programme par le parc de machine (c'est-à-dire l'exécution d'au moins un processus du programme cible par au moins une machine du parc).

Au cours du temps, les processus du programme cible déterminés comme étant à exécuter peuvent changer. Par ailleurs, le nombre de machines sur lequel un processus donné doit être exécuté en parallèle peut également changer (augmenter, rester constant, ou diminuer).

En particulier, un processus donné, en cours d'exécution par au moins une machine i donnée, peut ne plus être nécessaire, ou requérir moins de ressources matérielles.

Supposons qu'un processus donné est en cours d'exécution par au moins la machine i du parc (à l'issue de la mise en oeuvre d'une première itération du procédé).

Si ce processus donné n'est pas déterminé comme étant à exécuter au cours d'une itération suivante de l'étape de détermination 306, alors l'exécution de ce processus sur la machine i est stoppée, ce qui a pour effet de libérer du temps processeur sur cette machine i. Par ailleurs, le processus est effacé de la mémoire tampon 2i, ce qui libère de la mémoire tampon sur la machine i.

Très avantageusement, le processus est également effacé de la mémoire de stockage 4i : on dit conventionnellement que le processus est désinstallé de la machine i qui l'exécutait.

Les mêmes étapes de libération de ressources matérielles peuvent être mises en oeuvre dans le cas où le processus donné, en cours d'exécution par la machine i (au moins), n'est plus affecté à la machine i au cours d'une itération suivante de l'étape de détermination 306.

Dans ces deux cas de figure précités, la libération de ressources peut être mise en oeuvre par envoi, par le module d'affectation à la machine concernée, d'une requête de libération du processus.

Lorsqu'une machine du parc reçoit une requête de libération de ressources d'un processus qu'elle est en train d'exécuter, la machine libère les ressources concernée. Par exemple, lorsque la machine du parc reçoit une requête de désinstallation du processus, l'exécution du processus est stoppée et celui-ci est effacé des mémoires 4i et 2i.

Dans le mode de réalisation qui a été présenté ci-dessus, l'unité de traitement de données du serveur S met en oeuvre le programme de déploiement PD, et assure de ce fait une fonction de déploiement.

Il est en outre tout à fait possible que le serveur S puisse être utilisé comme une machine qui participe à l'exécution du programme cible PC. En effet, comme les machines M1-Mn, le serveur S dispose de ressources matérielles.

Dans ce cas, les processus qui sont affectés au serveur S ne seront pas envoyés à travers le réseau mais simplement chargés depuis la mémoire 4.

## Revendications

1. Procédé de commande de déploiement dans un parc de machines (M1-Mn) d'un programme à exécuter, le procédé comprenant des étapes de :
• mesure (102) d'une quantité de ressources matérielles disponible auprès de chaque machine (M1-Mn),
• mesure (302) d'une qualité de service du programme au cours de son exécution par le parc de machines,
• détermination (306) de plusieurs processus (P1-P5) du programme à exécuter en parallèle, à partir de la qualité de service mesurée et à partir d'une qualité de service de consigne prédéterminée,
• pour chaque processus (P1-P5), estimation (308) d'une quantité de ressources matérielles requise pour l'exécution du processus,
• affectation (400) des processus (P1-P5) à des machines du parc en fonction des quantités de ressources matérielles mesurées pour chacune des différentes machines et des quantités de ressources requises estimées,
• commande d'installation d'un processus affecté à une machine dans ladite machine, si le processus n'est pas déjà installé dans ladite machine,
• en cas d'échec de l'étape d'affectation, ajustement (304) de la qualité de service de consigne à une valeur dégradée par rapport à sa précédente valeur,
• mise en oeuvre des étapes de détermination (306) de processus à exécuter et d'affection (400), sur la base de la qualité de service de consigne ajustée.

2. Procédé selon la revendication précédente, comprenant en outre l'étape suivante:
• si un processus donné du programme est déjà en cours d'exécution par une machine du parc et que ce processus donné n'est pas déterminé comme étant à exécuter au cours de l'étape de détermination, commande de désinstallation du processus donné de la machine qui l'exécute.

3. Procédé selon l'une des revendications précédentes, comprenant en outre l'étape suivante:
• si un processus donné du programme est déjà en cours d'exécution par une machine du parc et que ce processus donné n'est pas affecté à la machine qui l'exécute au cours de l'étape d'affectation, commande de désinstallation du processus donné de la machine qui l'exécute.

4. Procédé selon l'une des revendications 1 à 3, dans lequel la mesure (302) de qualité de service du programme comprend :
• une mesure d'un temps de réponse du programme à une requête émanant d'au moins un équipement réseau, lorsqu'il est exécuté par le parc de machine, et/ou
• une mesure d'un nombre de requêtes émanant d'au moins un équipement réseau qui sont traitées par unité de temps, par le programme lorsqu'il est exécuté par le parc de machines, et/ou
• une mesure d'une durée de disponibilité durant laquelle le programme est apte à traiter des requêtes externes dans une période de temps prédéterminée, lorsqu'il est exécuté par le parc de machines.

5. Procédé selon l'une des revendications précédentes, comprenant en outre une étape de prédiction (204) de quantités de ressources matérielles consommées par le parc de machines à un instant de référence, à partir des quantités de ressources matérielles mesurées (102) au cours d'un intervalle de temps précédant l'instant de référence, la détermination des processus à exécuter à l'instant de référence dépendant des quantités de ressources matérielles consommées prédites.

6. Procédé selon la revendication précédente, dans lequel la prédiction comprend la recherche et la détection (202) d'un motif périodique dans les quantités de ressources matérielles mesurées au cours de l'intervalle de temps, les quantités de ressources matérielles requises dépendant du motif périodique détecté.

7. Procédé selon l'une des revendications précédentes, dans lequel l'affectation (400) comprend des comparaisons (402) entre des quantités de ressources mesurées et des quantités de ressource requises, l'affectation dépendant des résultats de ces comparaisons.

8. Procédé selon l'une des revendications précédentes, dans lequel l'affectation (400) des processus déterminés est mise en oeuvre séquentiellement machine après machine.

9. Procédé selon la revendication précédente, dans lequel des processus déterminés sont affectés à une machine, dite machine courante, tant que le cumul des quantités de ressources matérielles requises pour l'exécution de processus déjà affectés à la machine courante demeure inférieur à la quantité de ressources matérielle disponible auprès de la machine courante.

10. Produit programme d'ordinateur comprenant des instructions de code de programme pour l'exécution des étapes du procédé selon l'une des revendications précédentes, lorsque ce programme est exécuté par un serveur.

11. Produit programme d'ordinateur selon la revendication précédente, comprenant en outre les instructions de code des processus à faire exécuter par le parc de machines.

12. Serveur (S) comprenant :
• une interface de communication (6) pour communiquer avec un parc de machines,
• une mémoire (4) mémorisant un programme cible (PC) à faire exécuter par des machines dudit parc,
• une unité de déploiement (1) configurée pour :
∘ mesurer une quantité de ressources matérielles disponible auprès de chaque machine,
∘ mesurer une mesure de qualité de service du programme cible au cours de son exécution par le parc de machines,
∘ déterminer plusieurs processus du programme cible (PC) à exécuter en parallèle, à partir de la qualité de service mesurée et à partir d'une qualité de service de consigne prédéterminée,
∘ estimer, pour chaque processus, une quantité de ressources matérielles requise pour l'exécution du processus,
∘ affecter les processus à des machines du parc, en fonction des quantités de ressources matérielles mesurées pour chacune des différentes machines et des quantités de ressources requises estimées,
∘ commander l'installation d'un programme affecté à une machine dans ladite machine, si le processus n'est pas déjà installé dans ladite machine,
∘ en cas d'échec de l'étape d'affectation, ajuster la qualité de service de consigne à une valeur dégradée par rapport à sa précédente valeur,
∘ mettre en oeuvre les étapes de détermination de processus à exécuter et d'affection, sur la base de la qualité de service de consigne ajustée.

13. Utilisation du serveur selon la revendication 12 comme une machine du parc de machines.

## Patentansprüche

1. Verfahren zur Bereitstellungssteuerung eines auszuführenden Programms in einem Maschinenpark (M1-Mn), wobei das Verfahren folgende Schritte enthält:
• Messung (102) einer bei jeder Maschine (M1-Mn) verfügbaren Menge materieller Ressourcen,
• Messung (302) einer Dienstqualität des Programms während seiner Ausführung durch den Maschinenpark,
• Bestimmung (306) mehrerer parallel auszuführender Prozesse (P1-P5) des Programms ausgehend von der gemessenen Dienstqualität und ausgehend von einer vorbestimmten Solldienstqualität,
• für jeden Prozess (P1-P5), Schätzung (308) einer für die Ausführung des Prozesses erforderlichen Menge materieller Ressourcen,
• Zuweisung (400) der Prozesse (P1-P5) zu Maschinen des Parks abhängig von den für jede der verschiedenen Maschinen gemessenen Mengen materieller Ressourcen und von den geschätzten erforderlichen Ressourcenmengen,
• Steuerung der Installation eines einer Maschine zugewiesenen Prozesses in der Maschine, wenn der Prozess nicht bereits in der Maschine installiert wurde,
• im Fall des Scheiterns des Zuweisungsschritts, Anpassung (304) der Solldienstqualität auf einen bezüglich ihres vorhergehenden Werts verschlechterten Wert,
• Durchführung der Schritte der Bestimmung (306) des auszuführenden Prozesses und der Zuweisung (400) auf der Basis der angepassten Solldienstqualität.

2. Verfahren nach dem vorhergehenden Anspruch, das außerdem den folgenden Schritt enthält:
• wenn ein gegebener Prozess des Programms bereits von einer Maschine des Parks ausgeführt wird, und wenn dieser gegebene Prozess nicht als während des Bestimmungsschritts auszuführen bestimmt ist, Befehl der Deinstallation des gegebenen Prozesses von der Maschine, die ihn ausführt.

3. Verfahren nach einem der vorhergehenden Ansprüche, das außerdem den folgenden Schritt enthält:
• wenn ein gegebener Prozess des Programms bereits von einer Maschine des Parks ausgeführt wird, und wenn dieser gegebene Prozess nicht der Maschine zugewiesen ist, die ihn während des Zuweisungsschritts ausführt, Befehl der Deinstallation des gegebenen Prozesses von der Maschine, die ihn ausführt.

4. Verfahren nach einem der Ansprüche 1 bis 3, wobei die Messung (302) einer Dienstqualität des Programms enthält:
• eine Messung einer Antwortzeit des Programms auf eine von mindestens einer Netzwerkausrüstung kommende Anforderung, wenn es vom Maschinenpark ausgeführt wird, und/oder
• eine Messung einer Anzahl von von mindestens einer Netzwerkausrüstung kommenden Anforderungen, die pro Zeiteinheit verarbeitet werden, durch das Programm, wenn es vom Maschinenpark ausgeführt wird, und/oder
• eine Messung einer Verfügbarkeitsdauer, während der das Programm fähig ist, externe Anforderungen in einer vorbestimmten Zeitspanne zu verarbeiten, wenn es vom Maschinenpark ausgeführt wird.

5. Verfahren nach einem der vorhergehenden Ansprüche, das außerdem einen Vorhersageschritt (204) von Mengen materieller Ressourcen, die vom Maschinenpark zu einem Bezugszeitpunkt verbraucht werden, ausgehend von während eines Zeitintervalls vor dem Bezugszeitpunkt gemessenen Mengen materieller Ressourcen (102) enthält, wobei die Bestimmung der zum Bezugszeitpunkt auszuführenden Prozesse von den vorhergesagten Mengen verbrauchter materieller Ressourcen abhängt.

6. Verfahren nach dem vorhergehenden Anspruch, wobei die Vorhersage die Suche und die Erkennung (202) eines periodischen Musters in den während des Zeitintervalls gemessenen Mengen materieller Ressourcen enthält, wobei die erforderlichen Mengen materieller Ressourcen vom erkannten periodischen Muster abhängen.

7. Verfahren nach einem der vorhergehenden Ansprüche, wobei die Zuweisung (400) Vergleiche (402) zwischen gemessenen Ressourcenmengen und erforderlichen Ressourcenmengen enthält, wobei die Zuweisung von den Ergebnissen dieser Vergleiche abhängt.

8. Verfahren nach einem der vorhergehenden Ansprüche, wobei die Zuweisung (400) der bestimmten Prozesse sequentiell Maschine für Maschine durchgeführt wird.

9. Verfahren nach dem vorhergehenden Anspruch, wobei bestimmte Prozesse einer aktuelle Maschine genannten Maschine so lange zugewiesen werden, wie die Kumulierung der erforderlichen Mengen materieller Ressourcen für die Ausführung von Prozessen, die bereits der aktuellen Maschine zugewiesen sind, niedriger bleibt als die bei der aktuellen Maschine verfügbare Menge materieller Ressourcen.

10. Computerprogrammprodukt, das Programmcodeanweisungen für die Ausführung der Schritte des Verfahrens nach einem der vorhergehenden Ansprüche enthält, wenn dieses Programm von einem Server ausgeführt wird.

11. Computerprogrammprodukt nach dem vorhergehenden Anspruch, das außerdem die Codeanweisungen der vom Maschinenpark auszuführenden Prozesse enthält.

12. Server (S), der enthält:
• eine Kommunikationsschnittstelle (6) zur Kommunikation mit einem Maschinenpark,
• einen Speicher (4), der ein Zielprogramm (PC) speichert, das von Maschinen des Parks auszuführen ist,
• eine Bereitstellungseinheit (1), die konfiguriert ist, um:
∘ eine bei jeder Maschine verfügbare Menge materieller Ressourcen zu messen,
∘ eine Dienstqualitätsmessung des Zielprogramms während seiner Ausführung durch den Maschinenpark zu messen,
∘ mehrere parallel auszuführende Prozesse des Zielprogramms (PC) ausgehend von der gemessenen Dienstqualität und ausgehend von einer vorbestimmten Solldienstqualität zu bestimmen,
∘ für jeden Prozess eine Menge materieller Ressourcen zu schätzen, die für die Ausführung des Prozesses erforderlich ist,
∘ die Prozesse Maschinen des Parks abhängig von den für jede der verschiedenen Maschinen gemessenen Mengen materieller Ressourcen und den geschätzten erforderlichen Ressourcenmengen zuzuweisen,
∘ die Installation eines einer Maschine zugewiesenen Programms in der Maschine zu befehlen, wenn der Prozess nicht bereits in der Maschine installiert ist,
∘ im Fall des Scheiterns des Zuweisungsschritts die Solldienstqualität an einen bezüglich ihres vorhergehenden Werts verschlechterten Wert anzupassen,
∘ die Schritte der Bestimmung eines auszuführenden Prozesses und der Zuweisung auf der Basis der angepassten Solldienstqualität durchzuführen.

13. Verwendung des Servers nach Anspruch 12 als eine Maschine des Maschinenparks.

## Claims

1. Method for controlling the deployment of a program to be executed in a fleet of machines (M1-Mn), the method comprising steps of:
• measuring (102) an amount of hardware resources available from each machine (M1-Mn);
• measuring (302) a quality of service of the program when it is executed by the fleet of machines;
• determining (306) a plurality of processes (P1-P5) of the program to be executed simultaneously, based on the measured quality of service and based on a predetermined setpoint quality of service;
• estimating (308), for each process (P1-P5), an amount of hardware resources required to execute the process;
• assigning (400) the processes (P1-P5) to machines of the fleet as a function of the amounts of hardware resources measured for each of the different machines and of the estimated required amounts of resources;
• commanding the installation of a process assigned to a machine in said machine if the process is not already installed in said machine;
• adjusting (304), in case of the failure of the assigning step, the setpoint quality of service to a degraded value relative to its previous value;
• implementing the steps of determining (306) processes to be executed and of assigning (400) processes to machines based on the adjusted setpoint quality of service.

2. Method according to the preceding claim, further comprising the following step:
• if a given process of the program is already being executed by a machine of the fleet and this given process has not been determined as having to be executed during the determining step, commanding the uninstallation of the given process from the machine that executes said process.

3. Method according to any of the preceding claims, further comprising the following step:
• if a given process of the program is already being executed by a machine of the fleet and this given process is not assigned to the machine that executes it during the assigning step, commanding the uninstallation of the given process from the machine that executes said process.

4. Method according to any of Claims 1 to 3, wherein measuring (302) the quality of service of the program comprises:
• measuring a response time of the program to a request originating from at least one item of network equipment, when it is executed by the fleet of machines; and/or
• measuring a number of requests originating from at least one item of network equipment that are processed per unit of time by the program when it is executed by the fleet of machines; and/or
• measuring a period of availability during which the program is able to process external requests within a predetermined period of time when it is executed by the fleet of machines.

5. Method according to any of the preceding claims, further comprising a step (204) of predicting amounts of hardware resources consumed by the fleet of machines at a reference instant, based on the amounts of hardware resources measured (102) during a time interval preceding the reference instant, with determining the processes to be executed at the reference instant depending on the predicted consumed amounts of hardware resources.

6. Method according to the preceding claim, wherein the predicting comprises searching and detecting (202) a periodic pattern in the amounts of hardware resources measured during the time interval, with the required amounts of hardware resources depending on the detected periodic pattern.

7. Method according to any of the preceding claims, wherein assigning (400) comprises making comparisons (402) between amounts of measured resources and required amounts of resources, with assigning depending on the results of these comparisons.

8. Method according to any of the preceding claims, wherein assigning (400) the determined processes is implemented sequentially, one machine after another machine.

9. Method according to the preceding claim, wherein determined processes are assigned to a machine, called current machine, as long as the accumulation of the amounts of hardware resources required for executing processes already assigned to the current machine remains less than the amount of hardware resources available from the current machine.

10. Computer program product comprising program code instructions for executing the steps of the method according to any of the preceding claims, when this program is executed by a server.

11. Computer program product according to the preceding claim, further comprising the code instructions of the processes to be executed by the fleet of machines.

12. Server (S) comprising:
• a communication interface (6) for communicating with a fleet of machines;
• a memory (4) storing a target program (PC) to be executed by the machines of said fleet;
• a deployment unit (1) configured to:
∘ measure an amount of hardware resources available from each machine;
∘ measure a quality of service of the target program when it is executed by the fleet of machines;
∘ determine a plurality of processes of the program (PC) to be executed simultaneously, based on the measured quality of service and based on a predetermined setpoint quality of service;
∘ estimate, for each process, an amount of hardware resources required to execute the process;
∘ assign the processes to machines of the fleet as a function of the amounts of hardware resources measured for each of the different machines and of the estimated required amounts of resources;
∘ command the installation of a program assigned to a machine in said machine if the process is not already installed in said machine;
∘ adjust, in case of the failure of the assigning step, the setpoint quality of service to a degraded value relative to its previous value;
∘ implement the steps of determining processes to be executed and of assigning processes to machines based on the adjusted setpoint quality of service.

13. Use of the server according to Claim 12 as a machine of the fleet of machines.
